(19) Europäisches Patentamt
European Patent Office
Office européen des brevets

(11) EP 1 115 288 B1

(12) **FASCICULE DE BREVET EUROPEEN**

(45) Date de publication et mention de la délivrance du brevet:
**15.01.2003 Bulletin 2003/03**

(21) Numéro de dépôt: **99943000.2**

(22) Date de dépôt: **20.09.1999**

(51) Int Cl.⁷: **A01N 47/12**

(86) Numéro de dépôt international:
**PCT/FR99/02223**

(87) Numéro de publication internationale:
**WO 00/016629 (30.03.2000 Gazette 2000/13)**

# (54) COMPOSITIONS FONGICIDES

FUNGIZIDE ZUSAMMENSETZUNGEN

FUNGICIDE COMPOSITIONS

(84) Etats contractants désignés:
**AT BE CH CY DE DK ES FI FR GB GR IE IT LI LU MC NL PT SE**
Etats d'extension désignés:
**RO**

(30) Priorité: **21.09.1998 FR 9811895**

(43) Date de publication de la demande:
**18.07.2001 Bulletin 2001/29**

(73) Titulaire: **Bayer CropScience S.A.**
**69009 Lyon (FR)**

(72) Inventeurs:
- **CHAZALET, Maurice**
  **F-69480 Anse (FR)**
- **DUVERT, Patrice**
  **F-69004 Lyon (FR)**
- **GOUOT, Jean-Marie**
  **F-69450 Saint Cyr au Mont d'Or (FR)**
- **MERCER, Richard**
  **F-69130 Ecully (FR)**

(56) Documents cités:
**EP-A- 0 472 996**
**EP-A- 0 629 616**
**EP-A- 0 775 696**
**WO-A-96/03044**
**FR-A- 2 751 845**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 115 288 B1

## Description

La présente invention a pour objet de nouvelles compositions fongicides synergiques comprenant un dérivé de 2-imidazoline-5-one et un dérivé d'un amide d'amino-acide, destinées notamment à la protection des cultures. Elle concerne également un procédé pour protéger les cultures contre les maladies fongiques.

On connaît, notamment par la demande de brevet européen EP 551048, des composés dérivés de 2-imidazoline-5-ones à action fongicide, permettant de prévenir la croissance et le développement de champignons phytopathogènes qui attaquent ou sont susceptibles d'attaquer les cultures.

La demande de brevet internationale WO 96/03044 donne également à connaître un certain nombre de compositions fongicides comprenant une 2-imidazoline-5-one en association avec une ou plusieurs matières actives fongicides.

Les demandes de brevets EP-A-0 775 696 et EP-A-0 472 996 présentent de nouveaux composés à usage fongicide et possédant une structure d'amide d'amino-acide.

Cependant, il est toujours souhaitable d'améliorer les produits utilisables par l'agriculteur pour lutter contre les maladies fongiques des cultures, et notamment contre les mildious.

Il est également toujours souhaitable de réduire les doses de produits chimiques épandus dans l'environnement pour lutter contre les attaques fongiques des cultures, notamment en réduisant les doses d'application des produits.

Il est enfin toujours désirable d'augmenter le nombre de produits antifongiques à la disposition de l'agriculteur afin que celui-ci trouve parmi eux le mieux adapté à son usage particulier.

Un but de l'invention est donc de fournir une nouvelle composition fongicide, utile pour les problèmes exposés ci-dessus.

Un autre but de l'invention est de proposer une nouvelle composition fongicide utile dans le traitement préventif et curatif des maladies fongiques, par exemple des solanées et de la vigne.

Un autre but de l'invention est de proposer une nouvelle composition fongicide présentant une efficacité améliorée contre le mildiou et/ou la septoriose des solanées et de la vigne.

Un autre but de l'invention est de proposer une nouvelle composition fongicide présentant une efficacité améliorée contre le mildiou et/ou l'oïdium et/ou le botrytis de la vigne.

Il a maintenant été trouvé que ces buts pouvaient être atteints en totalité ou en partie grâce aux compositions fongicides synergiques selon la présente invention.

La présente invention a donc pour objet en premier lieu des compositions fongicides synergiques comprenant un composé (I) de formule :

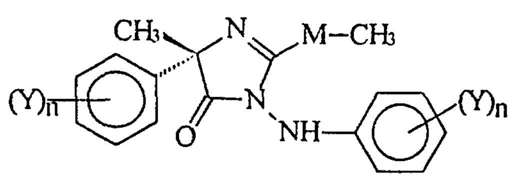

(I)

dans laquelle :

- M représente un atome d'oxygène ou de soufre ;
- n est un nombre entier égal à 0 ou 1 ;
- Y est un atome de fluor ou de chlore, ou un radical méthyle ;

et un composé de formule (II) :

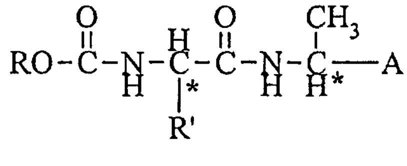

(II)

dans laquelle :

- R et R', identiques ou différents, sont choisis indépendamment l'un de l'autre parmi un radical alkyle linéaire ou ramifié contenant de 1 à 6 atomes de carbone,
- A représente un groupement choisi parmi A1 et A2, de formules respctives :

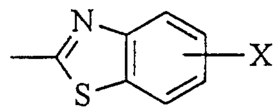

(A1)

et

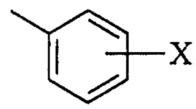

(A2)

- X représente l'atome d'hydrogène, un atome d'halogène, choisi parmi chlore, fluor, brome et iode, un radical alkyle linéaire ou ramifié contenant de 1 à 6 atomes de carbone, ou un radical alkoxy linéaire ou ramifié contenant de 1 à 6 atomes de carbone, et
- les astérisques représentent les centres d'asymétrie ;

le rapport composé (I)/composé (II) étant compris entre 50 et 0,01, de préférence entre 10 et 0,01, de préférence encore entre 5 et 0,2.

Les composés de formule (II) préférés pour les compositions fongicides selon l'invention sont tels que le centre d'asymétrie du carbone de l'acide aminé lui confère la configuration L.

Il est bien entendu que toutes les configurations possibles du composé (II), c'est-à-dire tous les isomères formés par les différentes configurations des deux carbones asymétriques, sont comprises dans le champ de la présente invention.

Il est bien entendu que les dites compositions fongicides peuvent renfermer un seul composé (I) ou plus d'un tel composé et/ou un seul composé (II) ou plus d'un tel composé, ainsi qu'un autre composé fongicide, selon l'utilisation à laquelle elles sont destinées.

Les compositions selon l'invention sont avantageuses pour lutter notamment contre les mildious et les septorioses des cultures, comme le concombre ou le pois par exemple, des solanées, telles que les pommes de terre ou les tomates, ainsi que contre le mildiou de la vigne.

Les compositions selon l'invention peuvent également être utilisées pour lutter contre d'autres maladies phytopathogènes des cultures bien connues de l'homme du métier qui a à sa disposition les composés de formule (I) et de formule (II).

Le composé (I) est connu, notamment par la demande de brevet EP-A-0 629 616.

Le composé (II), lorsque A représente le groupement A1, et son utilisation comme fongicide sont notamment décrits dans la demande de brevet européen EP-A-0 775 696.

Le composé (II), lorsque A représente le groupement A2, et son utilisation comme fongicide sont notamment décrits dans la demande de brevet européen EP-A-0 472 996.

Le rapport composé (I)/composé (II) est défini comme étant le rapport du poids de ces 2 composés. Il en est de même pour tout rapport de 2 composés chimiques, ultérieurement mentionné dans le présent texte, dans la mesure où une définition différente de ce rapport n'est pas expressément indiquée.

Ces compositions améliorent généralement de façon notable l'action respective et isolée du composé (I) et du composé (II) pour un certain nombre de champignons particulièrement nuisibles dans les cultures, notamment pour les solanées, plus particulièrement pour le mildiou des solanées, tout en conservant une absence de phytotoxicité vis-à-vis de ces cultures. Il en découle donc une amélioration du spectre d'activité et une possibilité de diminuer la dose respective de chaque matière active utilisée, cette dernière qualité étant particulièrement importante pour des raisons écologiques aisément compréhensibles.

On préfère les compositions fongicides selon l'invention pour lesquelles :

- le composé (I) est le composé de formule (I) dans laquelle M est un atome de soufre et n est égal à 0, encore appelé la (4-*S*)-4-méthyl-2-méthylthio-4-phényl-1-phénylamino-2-imidazoline-5-one, référencé dans la suite "Composé A", et
- le composé (IIA) est le composé de formule (II) dans laquelle R représente le radical isopropyle, A représente le groupement (A1), X représente l'atome de fluor placé en position 6 sur le radical 2-benzothiazolyle, l'acide aminé possède la configuration L et le carbone asymétrique porté par le radical 2-benzothiazolyle, la configuration R, encore appelé $N^1$-[(*R*)-1-(6-fluoro-2-benzothiazolyl)éthyl]-$N^2$-isopropoxy-carbonyl-L-valinamide, référencé dans la

suite "Composé B", ou bien

- le composé (IIB) est le composé de formule (II) dans laquelle R représente le radical isopropyle, A représente le groupement (A2), X représente le radical méthyle placé en position 4 sur le radical phényle, qu'il soit sous forme racémique ou de mélanges d'énantiomères et/ou de diastéréoisomères ou sous forme d'isomère optique pur, encore appelé [2-méthyl-1-(1-phényléthyl-carbamoyl)propyl]carbamate d'isopropyle, référencé dans la suite "Composé C".

Une forme particulièrement avantageuse du composé (C) est le produit dénommé communément Iprovalicarb.

Dans les compositions selon l'invention, le rapport composé (I)/composé (II) est choisi de manière à produire un effet synergique. On entend par effet synergique notamment celui défini par Colby S.R. dans un article intitulé "Calcul des réponses synergiques et antagonistes des combinaisons herbicides" paru dans la revue Weeds, 1967, 15, p. 20-22. Ce dernier article utilise la formule :

$$E=X+Y-XY/100$$

dans laquelle E représente le pourcentage attendu d'inhibition de la maladie pour l'association des deux fongicides à des doses définies (par exemple égales respectivement à x et y), X est le pourcentage d'inhibition observé de la maladie par le composé (I) à une dose définie (égale à x), Y est le pourcentage d'inhibition observé de la maladie par le composé (II) à une dose définie (égale à y). Lorsque le pourcentage d'inhibition observé de l'association est plus grand que E, il y a effet synergique.

On entend également par effet synergique celui défini par l'application de la méthode de Tammes, "Isoboles, a graphic representation of synergism in pesticides" Netherlands Journal of Plant Pathology, 70(1964), p. 73-80.

Les domaines de rapport composé (I)/composé (II) indiqués ci-dessus ne sont nullement limitatifs de la portée de l'invention, mais sont plutôt cités à titre indicatif, l'homme du métier étant tout à fait en mesure d'effectuer des essais complémentaires pour trouver d'autres valeurs du rapport de doses de ces deux composés, pour lesquels un effet synergique est observé.

Les compositions selon l'invention, comprenant le composé (I) et le composé (II), permettent d'observer des propriétés synergiques tout à fait remarquables.

Selon une variante des compositions selon l'invention, le rapport composé (I)/composé (II) est avantageusement compris entre 10 et 0,01, de préférence entre 5 et 0,2.

D'une manière générale, les compositions selon l'invention ont montré de bons résultats lorsque le rapport composé (I)/composé (II) est compris entre 5 et 1.

L'invention a encore pour objet les compositions comprenant une ou plusieurs associations selon l'invention telles que décrites ci-dessus.

L'invention comprend en outre les procédés de traitement des plantes contre les maladies phytopathogènes, caractérisés en ce que l'on applique une association d'un composé de formule (I) avec un composé de formule (II). On peut également appliquer une composition contenant les deux matières actives, ou, soit simultanément soit successivement de manière à avoir l'effet conjugué, deux compositions contenant chacune l'une des deux matières actives.

Ces compositions recouvrent non seulement les compositions prêtes à être appliquées sur la culture à traiter au moyen d'un dispositif adapté, tel qu'un dispositif de pulvérisation, mais également les compositions concentrées commerciales qui doivent être diluées avant application sur la culture.

La présente invention fournit une méthode de lutte contre une grande variété de maladies phytopathogènes de cultures, notamment contre les septorioses et le mildiou. La lutte contre ces maladies peut être réalisée par application foliaire directe.

La présente invention fournit donc un procédé de lutte, à titre curatif ou préventif, contre les maladies phytopathogènes des cultures, qui comprend le traitement de la dite culture (par exemple par application ou par administration) avec une quantité efficace et non phytotoxique d'une association telle que définie précédemment. Par traitement de la culture, on entend une application ou administration d'une composition fongicide telle que décrite précédemment sur les parties aériennes des cultures ou sur le sol où elles poussent et qui sont infestées ou susceptibles d'être infestées par une maladie phytopathogène, telle que le mildiou ou la septoriose, par exemple. Par traitement de la culture, on entend également le traitement des produits de reproduction de la culture, tels que les semences ou les tubercules par exemple.

Les compositions décrites ci-après sont utilisées en général pour application à des végétaux en croissance, ou à des lieux où l'on fait pousser des cultures, ou à l'enrobage ou au pelliculage des semences.

Parmi les moyens appropriés pour appliquer les composés de l'invention, on peut citer, l'utilisation de poudres,

de pulvérisations foliaires, de granulés, de brouillards ou de mousses, ou encore sous forme de suspensions de compositions finement divisées ou encapsulées ; pour les traitements des sols ou des racines par des imbibitions liquides, des poudres, des granulés, des fumées ou des mousses ; pour l'application aux semences des plantes, l'utilisation, comme agents de pelliculage ou d'enrobage des semences, de poudres ou de bouillies liquides.

Les composés ou les compositions selon l'invention sont, de manière appropriée, appliqués à la végétation et en particulier aux feuilles infestées par les champignons phytopathogènes. Une autre méthode d'application des composés ou des compositions selon l'invention est l'addition d'une formulation contenant la matière active, à l'eau d'irrigation. Cette irrigation peut être une irrigation au moyen d'arroseurs.

Les formulations convenables pour les applications des compositions selon l'invention comprennent les formulations convenables pour être utilisées sous forme de, par exemple, sprays, poudres, granulés, brouillards, mousses, émulsions ou autres.

Dans la pratique, pour la lutte contre les maladies phytopathogènes des cultures, une méthode, par exemple, consiste à appliquer aux plantes ou au milieu dans lequel elles poussent une quantité efficace d'une composition selon l'invention. Pour une telle méthode, la matière active est généralement appliquée sur le lieu même où l'infestation doit être contrôlée, et ce à une dose d'efficacité comprise entre environ 5 g et environ 2 kg de matière active par hectare de lieu traité. Dans des conditions idéales, selon la nature du champignon phytopathogène à traiter, une dose plus faible peut offrir une protection adéquate. Inversement, de mauvaises conditions climatiques, des résistances ou d'autres facteurs peuvent requérir des doses de matière active plus élevées. La dose optimale dépend habituellement de plusieurs facteurs, par exemple du type de champignon phytopathogène à traiter, du type ou du niveau de développement de la plante infestée, de la densité de végétation, ou encore de la méthode d'application. Plus préférentiellement, une dose efficace de matière active est comprise entre environ 20 g/ha et environ 1000 g/ha.

Pour leur emploi dans la pratique, les compositions selon l'invention peuvent être utilisées seules et peuvent aussi avantageusement être utilisées dans des compositions contenant l'une ou l'autre des matières actives ou encore les deux ensembles, en combinaison ou association avec un ou plusieurs autres composants compatibles qui sont par exemple des charges ou des diluants solides ou liquides, des adjuvants, des tensioactifs, ou équivalents, appropriés pour l'utilisation souhaitée et qui sont acceptables pour des usages en agriculture. Les compositions peuvent être de tout type connu dans le domaine et convenables pour l'application dans tous types de plantations ou de cultures. Ces compositions qui peuvent être préparées de toute manière connue dans ce domaine, font de même partie de l'invention.

Les compositions peuvent aussi contenir d'autres types d'ingrédients tels que des colloïdes protecteurs, des adhésifs, des épaississants, des agents thixotropes, des agents de pénétration, des huiles à pulvériser, des stabilisants, des conservateurs (en particulier des agents anti-moisissures), des agents séquestrants, ou autres, ainsi que d'autres ingrédients actifs connus possédant des propriétés pesticides (en particulier fongicides, insecticides, acaricides, nématicides) ou possédant des propriétés de régulateur de croissance des plantes. Plus généralement, les composés utilisés dans l'invention peuvent être combinés avec tous additifs solides ou liquides correspondants aux techniques de formulations usuelles.

Les doses d'utilisation efficaces des associations employées dans l'invention peuvent varier dans de grandes proportions, en particulier selon la nature des champignons phytopathogènes à éliminer ou le degré d'infestation, par exemple, des plantes par ces champignons.

En général, les compositions selon l'invention contiennent habituellement d'environ 0,05% à environ 99% (en poids) d'une ou plusieurs compositions selon l'invention, d'environ 1% à environ 95% d'une ou plusieurs charges solides ou liquides, et éventuellement, d'environ 0,1% à environ 50% d'un ou plusieurs autres composés compatibles, tels que des tensioactifs ou autres.

Dans le présent exposé, le terme "charge" signifie un composant organique ou inorganique, naturel ou synthétique, avec lequel le composant actif est combiné pour faciliter son application, par exemple, aux plantes, aux semences, ou au sol. Cette charge est par conséquent généralement inerte et elle doit être acceptable (par exemple acceptable pour des usages agronomiques, en particulier pour traiter les plantes).

La charge peut être solide, par exemple, argiles, silicates naturels ou synthétiques, silice, résines, cires, fertilisants solides (par exemple sels d'ammonium), minéraux naturels du sol, tels que kaolins, argiles, talc, chaux, quartz, attapulgite, montmorillonite, bentonite ou terres à diatomées, ou minéraux synthétiques, tels que silice, alumine, ou silicates, en particulier silicates d'aluminium ou de magnésium. Les charges solides convenables pour les granulés sont les suivantes : roches naturelles, pilées ou concassées, telles que calcite, marbre, pierre ponce, sépiolite, et dolomite ; granulés synthétiques de farines inorganiques ou organiques ; granulés de matériau organique tel que sciure, écorce de noix de coco, épi ou enveloppe de maïs ou tige de tabac ; kieselguhr, phosphate tricalcique, liège en poudre, ou noir de carbone adsorbant ; polymères solubles dans l'eau, résines, cires ; ou fertilisants solides. De telles compositions peuvent, si on le désire, contenir un ou plusieurs agents compatibles comme les agents mouillants, dispersants, émulsifiants ou colorants qui lorsqu'ils sont solides peuvent aussi servir de diluants.

Les charges peuvent aussi être liquides, par exemple : eau, alcools, en particulier butanol ou glycol, ainsi que leurs éthers ou esters, en particulier l'acétate de méthylglycol; cétones, en particulier acétone, cyclohexanone,

méthyléthylcétone, méthylisobutylcétone ou isophorone ; coupes de pétrole telles que hydrocarbures parafiniques ou aromatiques, en particulier xylènes ou alkylnaphtalènes ; huiles minérales ou végétales ; hydrocarbures aliphatiques chlorés, en particulier trichloroéthane ou chlorure de méthylène ; hydrocarbures aromatiques chlorés, en particulier chlorobenzènes ; solvants solubles dans l'eau ou fortement polaires tels que diméthylformamide, diméthylsulfoxyde, N,N-diméthylacétamide, N-méthylpyrrolidone ; N-octylpyrrolidone, gaz liquéfiés ; ou autres, qu'ils soient pris séparément ou en mélange.

L'agent tensioactif peut être un agent émulsifiant, un agent dispersant, ou un agent mouillant, de type ionique ou non ionique ou un mélange de ces agents tensioactifs. Parmi ceux-ci, on utilise par exemple des sels d'acides polyacryliques, des sels d'acides lignosulfoniques, des sels d'acides phénolsulfoniques ou naphtalènesulfoniques, des polycondensats d'oxyde d'éthylène avec des alcools gras ou des acides gras ou des esters gras ou des amines grasses, des phénols substitués (en particulier des alkylphénols ou des arylphénols), des esters-sels de l'acide sulfosuccinique, des dérivés de la taurine (en particulier des alkyltaurates), des esters phosphoriques d'alcools ou de polycondensats d'oxyde d'éthylène avec des phénols, des esters d'acides gras avec des polyols, ou des dérivés fonctionnels sulfates, sulfonates ou phosphates des composés décrits ci-dessus. La présence d'au moins un agent tensioactif est généralement essentielle lorsque la matière active et/ou la charge inerte sont seulement peu solubles ou non solubles dans l'eau et lorsque la charge de la dite composition à appliquer est de l'eau.

Les compositions selon l'invention peuvent de plus contenir d'autres additifs tels que des adhésifs ou des colorants. Des adhésifs tels que la carboxyméthylcellulose, ou des polymères synthétiques ou naturels sous forme de poudres, granulés ou matrices, tels que gomme arabique, latex, polyvinylpyrolydone, alcool polyvinylique ou acétate de polyvinyle, des phospholipides naturels, tels que céphalines ou lécithines, ou des phospholipides synthétiques peuvent être utilisés dans les formulations. Il est possible d'utiliser des colorants tels que des pigments inorganiques, tels que par exemple : oxydes de fer, oxydes de titane, ou Bleu de Prusse ; matières colorantes organiques, telles que celles du type alizarines, azoïques, ou phtalocyanines métalliques ; ou des oligo-éléments tels que sels de fer, manganèse, bore, cuivre, cobalt, molybdène ou zinc.

Les compositions contenant les associations de l'invention, qui sont employées pour lutter contre les champignons phytopathogènes des cultures, peuvent aussi contenir des stabilisants, d'autres agents fongicides, des insecticides, acaricides, nématicides, anti-helminthes ou anti-coccidoses, des bactéricides, des agents attractants ou répulsifs ou des phéromones pour les arthropodes ou les vertébrés, des désodorisants, des arômes, ou des colorants.

Ceux-ci peuvent être choisis à dessein pour améliorer la puissance, la persistance, la sécurité, le spectre d'action sur les champignons phytopathogènes des cultures ou pour rendre la composition capable d'accomplir d'autres fonctions utiles pour les surfaces traitées.

À titre d'exemple, les compositions selon l'invention peuvent contenir, outre un composé de formule (I) et un composé de formule (II) une autre matière active possédant des propriétés fongicides.

De manière appropriée, l'autre matière active fongicide peut être l'iprodione. D'autres matières actives fongicides peuvent néanmoins convenir tout à fait sans se départir de l'objet de la présente invention.

Ainsi, lorsque l'autre matière active est l'iprodione, des compositions tout à fait adaptées sont par exemple celles contenant le composé (A), le composé (B) et l'iprodione, ou bien le composé A, le composé (C) et l'iprodione.

Pour leur emploi en agriculture, les associations selon l'invention, sont par conséquent sous forme des compositions qui se présentent sous des formes solides ou liquides variées.

Les formes solides des compositions qui peuvent être utilisées sont les poudres pulvérulentes (avec une quantité de matière active, association selon l'invention, allant jusqu'à 99%), les poudres ou les granulés mouillables (y compris les granulés dispersables dans l'eau), et en particulier ceux obtenus par extrusion, compactage, imprégnation sur une charge, ou par granulation à partir d'une poudre (la quantité de matière active, association selon l'invention, dans ces granulés ou poudres mouillables, étant comprise entre environ 0,5% et environ 99%). Les compositions solides homogènes ou hétérogènes contenant une composition selon l'invention, par exemple les granulés, les boulettes, les briquettes ou les capsules, peuvent être utilisés pour traiter les eaux stagnantes ou de ruissellement sur une plus ou moins longue période de temps.

Un effet similaire peut être obtenu en utilisant des alimentations intermittentes ou des suintements des concentrés dispersables dans l'eau tels que décrits plus loin.

Les compositions liquides comprennent par exemple des solutions ou des suspensions aqueuses ou non aqueuses (telles que concentrés émulsionnables, émulsions, flowables, dispersions, ou solutions) ou encore des aérosols. Les compositions liquides comprennent également, en particulier, les concentrés émulsionnables, les dispersions, les émulsions, les gels, les flowables, les aérosols, les poudres mouillables (ou les poudres à pulvériser), les flowables secs ou pâtes sèches en tant que formes de compositions liquides ou bien destinées à former des compositions liquides lorsqu'elles seront appliquées, telles que par exemple des pulvérisations aqueuses, (incluant celles de volume faible ou ultra-faible) ou des brouillards ou des aérosols.

Les compositions liquides, par exemple sous forme de concentrés solubles ou émulsionnables comprennent le plus souvent d'environ 5 à environ 95% en poids de matière active, alors que les émulsions ou solutions qui sont

prêtes à l'emploi contiennent, quant à elles, environ de 0,01 à 20% de matière active. Outre le solvant, les concentrés solubles ou émulsionnables peuvent contenir, lorsque nécessaire, d'environ 2 à environ 50% d'additifs convenables, tels que des stabilisants, des agents tensioactifs, des agents de pénétration, des inhibiteurs de corrosion, des colorants ou des adhésifs. Quelles que soient leurs concentrations, les émulsions, qui sont particulièrement convenables pour l'application par exemple sur les plantes, peuvent être obtenues à partir de ces concentrés par dilution à l'eau. Ces compositions sont incluses dans le champ des compositions qui peuvent être employées dans la présente invention. Les émulsions peuvent revêtir les formes du type eau-dans-l'huile ou huile-dans-l'eau et elles peuvent être de consistance épaisse voire sous forme de gel.

Toutes ces dispersions ou émulsions aqueuses ou mélanges à pulvériser peuvent être appliqués, par exemple, aux végétaux par tout moyen convenable, en tout premier lieu par pulvérisation, à des doses qui sont généralement de l'ordre d'environ 100 à environ 1200 litres de mélange à pulvériser par hectare, mais peuvent être supérieures ou inférieures (par exemple de volume faible ou ultra-faible), selon le besoin ou la technique d'application.

Les suspensions concentrées, qui peuvent être appliquées par pulvérisation, sont préparées de manière à se présenter sous forme d'un produit fluide et stable qui ne sédimente pas (dans le cas de grains fins) et contenant généralement d'environ 10 à environ 75% en poids de matière active, d'environ 0,5 à environ 30% d'agents tensioactifs, d'environ 0,1 à environ 10% d'agents rhéologiques, d'environ 0 à environ 30% d'additifs convenables, tels que des agents anti-mousse, des inhibiteurs de corrosion, des stabilisants, des agents de pénétration, des adhésifs, et, comme charge, de l'eau ou un liquide organique dans lequel la matière active est peu soluble ou insoluble. Des solides organiques ou des sels inorganiques peuvent être dissous dans la charge afin d'éviter toute prise en masse ou pour servir d'antigels pour l'eau.

Les poudres mouillables ou poudres solubles ( poudre à pulvériser) sont généralement préparées de façon à contenir d'environ 10 à environ 100% en poids de matière active, d'environ 0 à environ 90% de charge solide, d'environ 0 à environ 5% d'un agent mouillant, d'environ 0 à environ 10% d'un dispersant et, lorsque c'est nécessaire, d'environ 0 à environ 80% d'un ou plusieurs stabilisants et/ou autres additifs, tels qu'agents de pénétration, adhésifs, agents "anti-caking", colorants, et autres. Pour obtenir ces poudres mouillables, la matière active est (ou les matières actives sont) intimement mélangée(s) dans un mélangeur convenable avec d'autres substances additionnelles qui peuvent être imprégnées sur un support poreux et est (ou sont) broyé(s) dans un broyeur ou autre appareil convenable et destiné à cet effet. Ceci fournit des poudres mouillables dont la mouillabilité et la qualité de suspension sont très avantageuses. Elles peuvent être en suspension dans l'eau pour fournir tout type de concentration désiré et cette suspension peut avantageusement être utilisée, en particulier pour application aux feuillages des plantes.

Les "granulés dispersables dans l'eau" (WG) et les granulés solubles (SG) ont des compositions qui sont substantiellement semblables à celles des poudres mouillables. Ils peuvent être préparés par granulation des formulations décrites pour les poudres mouillables, soit selon un procédé dit humide (par contact entre la matière active finement broyée avec la charge inerte et un peu d'eau, par exemple 1 à 20 % en poids, ou avec une solution aqueuse d'un liant ou d'un dispersant, suivi d'un séchage et d'un criblage), ou selon un procédé dit sec (broyage suivi de compactage et de criblage) comme ceux obtenus par extrusion.

Les doses et concentrations des compositions formulées peuvent varier selon la méthode d'application ou la nature des compositions ou selon leur utilisation. D'une manière générale, les compositions formulées contiennent habituellement d'environ 0,00001% à environ 100%, plus particulièrement d'environ 0,0005% à environ 80% en poids d'au moins une association selon l'invention, ou de la totalité des matières actives (c'est-à-dire une composition de l'invention en mélange avec d'autres substances pesticides ou des stabilisants). Concrètement, les compositions employées et leurs doses d'utilisation seront choisies pour obtenir le ou les effets recherchés par l'agriculteur, l'horticulteur, le sylviculteur, tout personnel technique chargé de la lutte contre les champignons phytopathogènes des cultures ou toute autre personne qualifiée dans ce domaine.

Les formulations suivantes décrites dans les Exemples A à I illustrent des formulations utilisables dans la lutte contre les champignons phytopathogènes des cultures qui comprennent, comme matière active, une ou plusieurs compositions selon l'invention. Les codes à deux lettres apparaissant entre parenthèses après les. noms des types de formulations sont les codes internationaux habituellement utilisés pour désigner ces formulations. Les formulations décrites dans les Exemples A à I peuvent chacune être diluées pour donner une composition à pulvériser à des concentrations convenables pour emploi dans les champs ou les vignes. Les descriptions chimiques générales des composants (pour lesquels tous les pourcentages suivants sont donnés en poids), utilisés dans les formulations des Exemples A à G et exemplifiés ci-dessous sont les suivants :

| Nom commercial | Description chimique |
|---|---|
| Igepal BC/10 | Condensat de nonylphenol/oxyde d'éthylène |
| Soprophor BSU | Condensat de tristyrylphénol/oxyde d'éthylène |

(suite)

| Nom commercial | Description chimique |
|---|---|
| Arylan CA | Solution à 70% poids/volume de dodécylbenzènesulfonate de calcium |
| Solvesso 150 | Solvant aromatique léger en $C_{10}$ |
| Supragil WP | Alkylnaphtalènesulfonates |
| Darvan No2 | Lignosulphonate de sodium |
| Celite PF | Charge synthétique à base de silicate de magnésium |
| Sopropon T36 | Sels de sodium d'acides polycarboxyliques |
| Rhodopol 23 | Gomme xanthane polysaccharide |
| Bentone 38 | Dérivé organique de montmorillonite de magnésium |
| Supragil MNS90 | Condensat d'alkylnaphtalènesulfonates |
| Rhodorsil Antifoam 432 | Émulsion silicone |
| Aérosil | Dioxyde de silicium microfin |

**EXEMPLE A :**

Un concentré hydrosoluble (SL) est préparé avec la composition suivante :

| | |
|---|---|
| Matière active | 7% |
| Igepal BC/10 | 10% |
| Eau | 83% |

A une solution de Igepal BC/10 dissoute dans une quantité de N-méthylpyrrolidone est ajoutée la matière active tout en chauffant et en agitant jusqu'à dissolution. La solution ainsi obtenue est ajustée au volume par ajout du solvant restant.

**EXEMPLE B :**

Un concentré émulsionnable (EC) est préparé avec la composition suivante :

| | |
|---|---|
| Matière active | 25% (max.) |
| Soprophor BSU | 10% |
| Arylan CA | 5% |
| N-méthylpyrrolidone | 50% |
| Solvesso 150 | 10% |

Les trois premiers composants sont dissous dans la N-méthylpyrrolidone ; le Solvesso 150 est ajouté ensuite pour ajuster au volume final.

**EXEMPLE C :**

Une poudre mouillable (WP) est préparée avec la composition suivante :

| | |
|---|---|
| Matière active | 40% |
| Supragil WP | 2% |
| Supragil MNS90 | 5% |
| Celite PF | 53% |

Les ingrédients sont mixé et broyés dans un broyeur à marteau jusqu'à obtention d'une poudre dont la taille des particules est inférieure à 50 microns.

**EXEMPLE D :**

Une formulation suspension concentrée est préparée avec la composition suivante :

| | |
|---|---|
| Matière active | 40,00% |
| IGEPAL BC/10 | 1,00% |
| Sopropon T36 | 0,20% |
| Propylène glycol | 5,00% |
| Rhodopol 23 | 0,15% |
| Eau | 53,65% |

Les ingrédients sont intimement mélangés et broyés dans un broyeur à billes jusqu'à ce qu'une taille moyenne de particules inférieure à 3 microns soit obtenue.

**EXEMPLE E :**

Un granulé dispersable dans l'eau (WG) est préparé avec la composition suivante :

| | |
|---|---|
| Matières actives | 80% |
| Darvan No 2 | 12% |
| Supragil MNS90 | 8% |
| Supragil WP | 2% |

Les ingrédients sont mélangés, micronisés dans un broyeur à énergie fluide puis granulés dans un granulateur rotatif par pulvérisation d'eau (jusqu'à 10%). Les granulés ainsi obtenus sont séchés dans un sécheur à lit fluidisé afin d'éliminer l'excès d'eau.

**EXEMPLE F :**

Une poudre pulvérulente (DP) est préparée avec la composition suivante :

| | |
|---|---|
| Matière active | 1 à 10% |
| Poudre de talc superfine | 99 à 90% |

Les ingrédients sont intimement mélangés puis broyés jusqu'à obtention d'une poudre fine.

**EXEMPLE G :**

Une poudre mouillable (WP) est préparée avec la composition suivante :

| | |
|---|---|
| Matière active | 50% |
| Igepal BC/10 | 5% |
| Aérosil | 5% |
| Célite PF | 40% |

L'Igepal BC/10 est adsorbé sur l'Aérosil qui est ensuite mélangé avec les autres ingrédients et broyé dans un broyeur à marteau pour donner une poudre mouillable, qui peut être diluée à l'eau jusqu'à une concentration de 0,001% à 2% en poids de matière active et appliqué en un lieu d'infestation par les champignons phytopathogènes des cultures à détruire par pulvérisation.

Les nombreuses formulations citées ci-dessus le sont à titre d'exemples et ne sont pas limitées à ceux-ci. L'homme du métier saura apprécier l'usage du type de formulation approprié pour le problème spécifique qu'il aura à résoudre. D'une façon générale, les formulations de type WG (granulés dispersables dans l'eau) sont particulièrement adaptées aux procédés de traitement à l'aide des compositions selon la présente invention.

Les compositions fongicides selon l'invention contiennent habituellement de 0,5 à 95 % de la combinaison du composé (I) et du composé (II).

Il peut s'agir de la composition concentrée c'est-à-dire du produit commercial associant le composé (I) et le composé (II). Il peut s'agir également de la composition diluée prête à être appliquée sur les cultures à traiter. Dans ce dernier cas la dilution à l'eau peut être effectuée soit à partir d'une composition concentrée commerciale renfermant le composé (I) et le composé (II) (ce mélange est appelé " prêt à l'emploi " ou encore " ready mix ", en langue anglaise) , soit au moyen du mélange extemporané (appelé en anglais " tank mix ") de deux compositions concentrées commerciales renfermant chacune le composé (I) et le composé (II).
L'invention a enfin pour objet un procédé de lutte, à titre curatif ou préventif, contre les champignons phytopathogènes des cultures, caractérisé en ce que l'on applique aux végétaux à traiter une quantité efficace et non phytotoxique d'une composition fongicide selon l'invention.
Les champignons phytopathogènes des cultures qui peuvent être combattus par ce procédé sont notamment ceux :

- du groupe des oomycètes :
  - du genre *Phytophthora* tel que *Phytophthora infestans* (mildiou des solanées, notamment de la pomme de terre ou de la tomate),
  - de la famille des Péronosporacées, notamment *Plasmopara viticola* (mildiou de la vigne), *Plasmopara halstedii* (mildiou du tournesol), *Pseudoperonospora sp* (notamment mildiou des cucurbitacées et du houblon), *Bremia lactucae* (mildiou de la laitue), *Peronospora tabacinae* (mildiou du tabac), *Peronospora parasitica* (mildiou du chou), *Peronospora viciae* (mildiou du pois), *Peronospora destructor* (mildiou de l'oignon) ;
- du groupe des adélomycètes :
  - du genre *Alternaria*, par exemple *Alternaria solani* (alternariose des solanées, et notamment de la tomate et des pommes de terre ),
  - du genre *Guignardia*, notamment *Guignardia bidwelli* (black rot de la vigne),
  - du genre *Oïdium*, par exemple oïdium de la vigne (*Uncinula necator*), oïdium des cultures légumières, par exemple *Erysiphe polygoni* (oidium des crucifères), *Leveillula taurica, Erysiphe cichoracearum, Sphaerotheca fuligena*, (oïdium des cucurbitacées, des composées, de la tomate), *Erysiphe communis* (oïdium de la betterave et du chou), *Erysiphe pisi* (oïdium du pois, de la luzerne), *Erysiphe polyphaga* (oïdium du haricot et du concombre), *Erysiphe umbelliferarum* (oïdium des ombellifères, notamment de la carotte), *Sphaerotheca humuli* (oïdium du houblon) ;
- du groupe des champignons du sol :
  - du genre *Pythium sp*.,
  - du genre *Aphanomyces sp*., notamment *Aphanomyces euteiches* (pourridie du pois), *Aphanomyces cochlioides* (pourriture noire de la betterave).

Par l'expression "on applique aux végétaux à traiter", on entend signifier, au sens du présent texte, que les compositions fongicides objets de l'invention peuvent être appliquées au moyen de différents procédés de traitement tels que :

- la pulvérisation sur les parties aériennes des dits végétaux d'un liquide comprenant une des dites compositions,
- le poudrage, l'incorporation au sol de granulés ou de poudres, l'arrosage, autour des dits végétaux, et dans le cas des arbres l'injection ou le badigeonnage,
- l'enrobage ou le pelliculage des semences des dits végétaux à l'aide d'une bouillie comprenant une des dites compositions.

La pulvérisation d'un liquide sur les parties aériennes des cultures à traiter est le procédé de traitement préféré.
Par "quantité efficace et non phytotoxique", on entend une quantité de composition selon l'invention suffisante pour permettre le contrôle ou la destruction des champignons présents ou susceptibles d'apparaître sur les cultures, et n'entraînant pour lesdites cultures aucun symptôme de phytotoxicité. Une telle quantité est susceptible de varier dans de larges limites selon le champignon à combattre, le type de culture, les conditions climatiques, et la nature du composé (II) compris dans la composition fongicide selon l'invention. Cette quantité peut être déterminé par des essais systématiques au champ, à la portée de l'homme du métier.
Dans les conditions usuelles de la pratique agricole, une quantité de composition fongicide selon l'invention correspondant à une dose de composé (I) comprise entre 10 et 500 g/ha, de préférence entre 20 et 300 g/ha, donne

généralement de bons résultats.

Selon l'invention, la quantité de composition fongicide correspond avantageusement à une dose de composé (II) comprise entre 10 et 500 g/ha, de préférence entre 20 et 300 g/ha.

Les exemples suivants sont donnés à titre purement illustratifs de l'invention et ne la limitent en aucune façon.

Bien que l'invention ait été décrite en termes de nombreuses variantes préférées, l'homme du métier appréciera que de nombreuses modifications, substitutions, omissions et changements peuvent être faits sans se départir de l'esprit de celle-ci. Ainsi, il est bien entendu que la portée de la présente invention est limitée uniquement par la portée des revendications suivantes, ainsi que par leurs équivalents.

**Exemple 1:** Essai d'une composition contre le mildiou de la vigne (action préventive) :

On utilise une composition comprenant le Composé A sous forme de suspension concentrée (SC) à 500 g/l et une composition comprenant le Composé B sous forme d'une poudre mouillable à 100 g/kg.

On prépare une bouillie contenant le Composé A à une dose de 125 g/l et le Composé B à une dose de 37,5 g/l (ratio Composé A/Composé B environ égal à 3,33). Cette bouillie est diluée à l'eau et appliquée en jet projeté sur les parties aériennes des plants de vigne à raison de 600 à 1000 l/ha selon le degré d'infestation.

Cette association a été étudiée contre *Plasmopara viticola* sur vigne. Le protocole expérimental est décrit ci-dessous.

Des plants de vignes (var. Gamay) au stade de préfloraison (boutons floraux séparés) sont traités par les compositions fongicides aux doses citées ci-dessus. Une contamination artificielle sur les ceps situés autour des parcelles est effectué par inoculation de *Plasmopara viticola* deux jours après le traitement.

Le traitement par la bouillie contenant le Composé A et le Composé B est réitéré tous les 10 jours.

Onze jours après le $7^{ème}$ traitement, une notation est alors effectuée. Celle-ci consiste à estimer visuellement la fréquence (c'est-à-dire le nombre ramené à un pourcentage) des grappes ou des feuilles qui portent des taches de mildiou (c'est-à-dire qui portent une infection sporulante reconnaissable au duvet blanchâtre) et, par comparaison à un témoin non traité-contaminé, puis à définir le pourcentage d'efficacité pratique selon la formule suivante :

$$\%\text{ efficacité pratique} = \frac{100 \times (\text{Fréquence Témoin - Fréquence Essai})}{\text{Fréquence Témoin}}$$

L'efficacité théorique selon la formule de Colby est calculée d'après la formule suivante: (ET = efficacité théorique ; EP = efficacité pratique)

$$\%ET\ (A+B) = \%\ EP\ (A) + \%\ ET\ (B) - (\%\ EP\ (A) \times \%\ EP\ (B)\ /\ 100)$$

Dans cet essai, la composition selon l'invention a montré une efficacité pratique de 90,3%, alors que l'efficacité théorique, calculée par la formule de Colby prévoyait une valeur de 75,0%.

Cette grande différence entre efficacité pratique et efficacité théorique montre clairement un effet synergique important entre les deux Composés A et B.

**Exemple 2 :** Essai d'une composition contre le mildiou de la vigne (action curative) :

On utilise une composition comprenant le Composé A sous forme de suspension concentrée (SC) à 500 g/l et une composition comprenant le Composé B sous forme d'une poudre mouillable à 100 g/kg.

On réalise une composition contenant le Composé A à une dose de 0,6 ppm et le Composé B à une dose de 0,3 ppm (ratio Composé A/Composé B égal à 2).

Cette association a été étudiée contre *Plasmopara viticola* sur vigne. Le protocole expérimental est décrit ci-dessous.

Des plants de vignes (var. Chardonnay) âgés de 8 semaines sont inoculés par pulvérisation à la face inférieure des feuilles d'une suspension aqueuse contenant 100000 spores de *Plasmopara viticola*/ml d'inoculum. Les plants sont alors placés en cellule climatique à 20°C, 100% HR (humidité relative) pendant 24 heures puis sont traités par les compositions fongicides aux doses citées ci-dessus (3 répétitions/dose). Ils ensuite replacés en cellule climatique à 20°C, 100% HR (humidité relative) pendant un total de 6 jours. Deux notations sont alors effectuées (la première à 5 jours et la seconde 1 jour plus tard). Celle-ci consiste à estimer la surface foliaire supportant une infection sporulante (reconnaissable au duvet blanchâtre) et, par comparaison à un témoin non traité-contaminé, à définir le pourcentage d'efficacité selon la formule suivante:

$$\% \text{ efficacité pratique} = \frac{100 \times (\% \text{ contamination Témoin} - \% \text{ contamination Essai})}{\% \text{ contamination Témoin}}$$

L'efficacité théorique selon la formule de Colby est calculée d'après la formule suivante: (ET = efficacité théorique ; EP = efficacité pratique)

$$\%ET\ (A+B) = \%\ EP\ (A) + \%\ ET\ (B) - (\%\ EP\ (A) \times \%\ EP\ (B) / 100)$$

Les résultats suivants sont obtenus :

| | Notation | |
|---|---|---|
| | 5 jours après traitement | 6 jours après traitement |
| Efficacité pratique (EP %) | 80 | 66,7 |
| Efficacité théorique (ET %) | 52,8 | 39,3 |
| Synergie (EP - ET) | 27,2 | 27,4 |

Ici encore, on note une forte synergie entre les composés A et B dans cet essai curatif sur vigne.

**Exemple 3 :** Essai d'une composition contre le mildiou de la pomme de terre (action préventive) :

On utilise la même composition que celle décrite dans les deux exemples précédents (Composé A sous forme de suspension concentrée (SC) à 500 g/l et Composé B sous forme d'une poudre mouillable à 100 g/kg).

On prépare une bouillie contenant le Composé A à une dose de 100 g/l et le Composé B à une dose de 25 g/l (ratio Composé A/Composé B égal à 4). Cette bouillie est diluée à l'eau et appliquée en pulvérisation foliaire à raison de 450 litres de bouillie par hectare.

Cette association a été étudiée contre *Phytophthora infestans* sur pomme de terre. Le protocole expérimental est décrit ci-dessous.

Des plants de pommes de terre (var. Up To Date) en développement rapide et avant floraison sont traités par les compositions fongicides aux doses citées ci-dessus. Aucune contamination artificielle n'est effectuée afin de laisser l'attaque naturelle du champignon *Phytophthora infestans* se développer.

Le traitement par la bouillie contenant le Composé A et le Composé B est réitéré tous les 7 jours environ. On effectue ainsi 6 traitements et les notations sont alors effectuées. Celles-ci consistent à estimer visuellement le pourcentage de destruction de l'ensemble de la végétation (feuillage et tige) par le mildiou et, par comparaison à un témoin non traité-contaminé, puis à définir le pourcentage d'efficacité pratique comme décrit dans les exemples précédents.

Parallèlement, l'efficacité théorique selon la formule de Colby est calculée.

Les résultats suivants sont obtenus :

(Dans cet essai les plants non traités (témoins) sont détruits à 100%)

| | Notation (jours après le traitement n° 6) | | |
|---|---|---|---|
| | 15 jours | 23 jours | 26 jours |
| Efficacité pratique | 76,2 | 52,5 | 40 |
| Efficacité théorique | 47,4 | 19,1 | 16,9 |
| Synergie (EP - ET) | 28,8 | 33,4 | 23,1 |

Ici encore, on note une forte synergie entre les composés A et B dans cet essai préventif sur pomme de terre.

**Exemple 4 :** Essai d'une composition contre le mildiou de la pomme de terre (action curative) :

On utilise la même composition que celle décrite dans les trois exemples précédents (Composé A sous forme de suspension concentrée (SC) à 500 g/l et Composé B sous forme d'une poudre mouillable à 100 g/kg).

On prépare une bouillie contenant le Composé A à une dose de 150 g/l et le Composé B à une dose de 37,5 g/l (ratio Composé A/Composé B égal à 4). Cette bouillie est diluée à l'eau et appliquée en pulvérisation foliaire à raison de 1000 litres de bouillie par hectare.

Cette association a été étudiée contre *Phytophthora infestans* sur pomme de terre. Le protocole expérimental est décrit ci-dessous.

Des plants de pommes de terre (var. Sirtema) sont repérés (10 pousses par parcelle)et leur feuillage est inoculé avec une suspension aqueuse de spores de *Phytophthora infestans* (35000 spores/ml). Les feuilles sont ensuites ensachées pour permettre le développement du champignon. Après 20 heures, les sachets sont retirés et on effectue un seul traitement avec les compositions fongicides aux doses citées ci-dessus.
Deux notations sont alors effectuées à 5 et 8 jours après le traitement. Celles-ci consistent à estimer visuellement le pourcentage de destruction de l'ensemble de la végétation (feuillage et tige) par le mildiou et, par comparaison à un témoin non traité-contaminé, puis à définir le pourcentage d'efficacité pratique comme décrit dans les exemples précédents.

Parallèlement, l'efficacité théorique selon la formule de Colby est calculée.

Les résultats suivants sont obtenus

| | Notation (jours après traitement) | |
|---|---|---|
| | 5 jours | 8 jours |
| Témoin | 88,4 | 90,3 |
| Efficacité pratique | 66,1 | 62,3 |
| Efficacité théorique | 44 | 42,6 |
| Synergie (EP - ET) | 22,1 | 19,7 |

Cet essai préventif sur pomme de terre démontre une fois de plus la synergie des compositions selon la présente invention.

## Revendications

1. Compositions fongicides synergiques comprenant un composé (I) de formule :

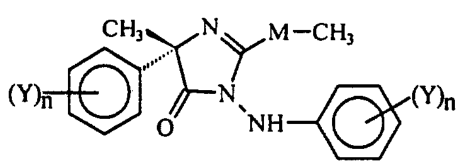

(I)

dans laquelle :

- M représente un atome d'oxygène ou de soufre ;
- n est un nombre entier égal à 0 ou 1 ;
- Y est un atome de fluor ou de chlore, ou un radical méthyle ;

et un composé de formule (II) :

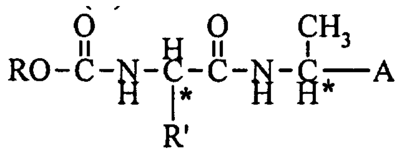

(II)

dans laquelle :

- R et R', identiques ou différents, sont choisis indépendamment l'un de l'autre parmi un radical alkyle linéaire ou ramifié contenant de 1 à 6 atomes de carbone,
- A représente un groupement choisi parmi A1 et A2, de formules respectives :

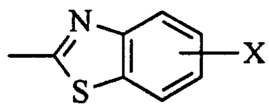

(A1) et

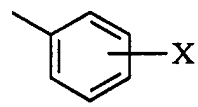

(A2)

- X représente l'atome d'hydrogène, un atome d'halogène, choisi parmi chlore, fluor, brome et iode, un radical alkyle linéaire ou ramifié contenant de 1 à 6 atomes de carbone, ou un radical alkoxy linéaire ou ramifié contenant de 1 à 6 atomes de carbone, et
- les astérisques représentent les centres d'asymétrie ;

le rapport composé (I)/composé (II) étant compris entre 50 et 0,01, de préférence entre 10 et 0,01, de préférence encore entre 5 et 0,2.

**2.** Compositions fongicides synergiques selon la revendication 1, **caractérisées en ce que** le composé (I) est la (4-*S*)-4-méthyl-2-méthylthio-4-phényl-1-phénylamino-2-imidazoline-5-one.

**3.** Compositions fongicides synergiques selon la revendication 1, **caractérisées en ce que** le composé (II) est le $N^1$-[(*R*)-1-(6-fluoro-2-benzothiazolyl)éthyl]-$N^2$-isopropoxycarbonyl-L-valinamide.

**4.** Compositions fongicides synergiques selon la revendication 1, **caractérisées en ce que** le composé (II) est le [2-méthyl-1-(1-phényléthyl-carbamoyl)propyl] carbamate d'isopropyle, sous forme de racémique, de mélanges d'énantiomères et/ou de diastéréoisomères, ou d'isomère optique pur.

**5.** Compositions fongicides synergiques selon la revendication 1, **caractérisées en ce que** le composé (I) est la (4-S) 4-méthyl-2-méthylthio-4-phényl-1-phénylamino-2-imidazoline-5-one et le composé (II) est le $N^1$-[(*R*)-1-(6-fluoro-2-benzothiazolyl)éthyl]-$N^2$-isopropoxycarbonyl-L-valinamide.

**6.** Compositions fongicides synergiques selon la revendication 1, **caractérisées en ce que** le composé (I) est la (4-S) 4-méthyl-2-méthylthio-4-phényl-1-phénylamino-2-imidazoline-5-one et le composé (II) est le [2-méthyl-1-(1-phényléthyl-carbamoyl)propyl]carbamate d'isopropyle, sous forme de racémique, de mélanges d'énantiomères et/ou de diastéréoisomères, ou d'isomère optique pur.

**7.** Compositions fongicides synergiques selon l'une des revendications 1 à 6, **caractérisées en ce qu'**elles comprennent en outre une autre matière active fongicide, notamment l'iprodione.

**8.** Compositions fongicides synergiques selon l'une des revendications 1 à 7, **caractérisées en ce que** le rapport composé (I)/composé (II) est compris entre 5 et 1.

**9.** Compositions fongicides synergiques selon l'une des revendications 1 à 8, **caractérisées en ce qu'**elles comprennent outre les composés (I) et (II) un support inerte convenable en agriculture et éventuellement un tensioactif convenable en agriculture.

**10.** Compositions fongicides synergiques selon l'une des revendications 1 à 9, **caractérisées en ce qu'**elles comprennent de 0,5 à 99 % de la combinaison du composé (I) et du composé (II).

**11.** Procédé de lutte contre les champignons phytopathogènes des cultures en un lieu, consistant à appliquer au dit lieu un composé (I) et un composé (II) tels que définis dans la revendication 1.

**12.** Procédé de lutte, à titre curatif ou préventif, contre les champignons phytopathogènes des cultures, **caractérisé en ce que** l'on applique aux végétaux à traiter une quantité efficace et non phytotoxique d'une composition fongicide synergique selon Tune des revendications 1 à 10.

**13.** Procédé selon la revendication 12, **caractérisé en ce que** la composition fongicide synergique est appliquée par pulvérisation d'un liquide sur les parties aériennes des cultures à traiter.

**14.** Procédé selon Tune des revendications 12 ou 13, **caractérisé en ce que** la quantité de composition fongicide synergique correspond à une dose de composé (I) comprise entre 10 et 500 g/ha, de préférence entre 20 et 300 g/ha.

**15.** Procédé selon Tune quelconque des revendications 12 à 14, **caractérisé en ce que** la quantité de composition fongicide synergique correspond à une dose de composé (II) comprise entre 10 et 500 g/ha, de préférence entre 20 et 300 g/ha.

**16.** Produit comprenant un composé de formule (I) et un composé de formule (II) en tant que préparation combinée pour utilisation simultanée, séparée ou séquentielle dans la lutte contre les champignons phytopathogènes des cultures en un lieu.

## Patentansprüche

**1.** Synergistische fungizide Zusammensetzungen, die enthalten:

eine Verbindung (I) der Formel

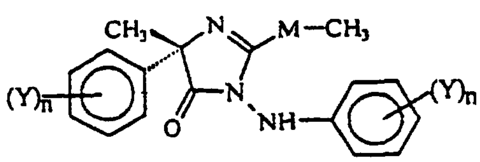

(I),

in der bedeuten:

- M ein Sauerstoff- oder Schwefelatom,
- n die ganze Zahl 0 oder 1,
- Y ein Fluor- oder Chloratom oder eine Methylgruppe,

und eine Verbindung der Formel (II)

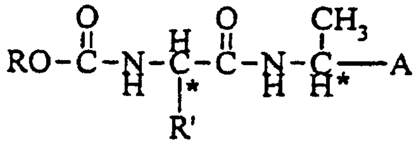

(II),

in der bedeuten:

- R und R', die gleich oder verschieden sind, Gruppen, die unabhängig unter geradkettigen oder verzweigten Alkylgruppen, die 1 bis 6 Kohlenstoffatome enthalten, ausgewählt sind,
- A eine Gruppe, die ausgewählt ist unter A1 und A2 der Formel

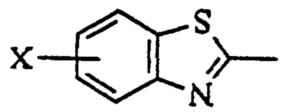

(A1)

bzw.

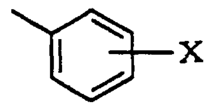

(A2)

- X ein Wasserstoffatom, ein Halogenatom, das unter Chlor, Fluor, Brom und Iod ausgewählt ist, eine geradkettige oder verzweigte Alkylgruppe, die 1 bis 6 Kohlenstoffatome enthält, oder eine geradkettige oder verzweigte Alkoxygruppe, die 1 bis 6 Kohlenstoffatome enthält;
- die Sternchen Asymmetriezentren;

wobei das Verhältnis Verbindung (1)/Verbindung (II) im Bereich von 50 bis 0,01, vorzugsweise 10 bis 0,01, noch bevorzugter 5 bis 0,2 liegt.

**2.** Synergistische fungizide Zusammensetzungen nach Anspruch 1, **dadurch gekennzeichnet, daß** es sich bei der Verbindung (I) um (4-*S*)-4-Methyl-2-methylthio-4-phenyl-1-phenylamino-2-imidazolin-5-on handelt.

**3.** Synergistische fungizide Zusammensetzungen nach Anspruch 1, **dadurch gekennzeichnet, daß** es sich bei der Verbindung (II) um $N^1$-[(*R*)-1-(6-Fluor-2-benzothiazolyl]-ethyl]-$N^2$-isopropoxycarbonyl-Lvalinamid handelt.

**4.** Synergistische fungizide Zusammensetzungen nach Anspruch 1, **dadurch gekennzeichnet, daß** es sich bei der Verbindung (II) um Isopropyl-[2-methyl-1-(1-phenylethylcarbamoyl)-propyl]-carbamat in Form des Racemats, in Form von Gemischen von Enantiomeren und/oder Diastereomeren oder in Form eines optisch reinen Isomers handelt.

**5.** Synergistische fungizide Zusammensetzungen nach Anspruch 1, **dadurch gekennzeichnet, daß** es sich bei der Verbindung (I) um (4-*S*)-4-Methyl-2-methylthio-4-phenyl-1-phenylamino-2-imidazolin-5-on und bei der Verbindung (II) um $N^1$-[(*R*)-1-(6-Fluor-2-benzothiazolyl)-ethyl]-$N^2$-isopropoxycarbonyl-L-valinamid handelt.

**6.** Synergistische fungizide Zusammensetzungen nach Anspruch 1, **dadurch gekennzeichnet, daß** es sich bei der Verbindung (I) um (4-*S*)-4-Methyl-2-methylthio-4-phenyl-1-phenylamino-2-imidazolin-5-on und bei der Verbindung (II) um Isopropyl-(2-methyl-1-(1-phenylethylcarbamoyl)-propyl]-carbamat in Form des Racemats, in Form von Gemischen von Enantiomeren und/oder Diastereomeren oder in Form eines optisch reinen Isomers handelt.

**7.** Synergistische fungizide Zusammensetzungen nach einem der Ansprüche 1 bis 6, **dadurch gekennzeichnet, daß** sie außerdem einen weiteren fungiziden Wirkstoff, insbesondere Iprodion, enthalten.

**8.** Synergistische fungizide Zusammensetzungen nach einem der Ansprüche 1 bis 7, **dadurch gekennzeichnet, daß** das Verhältnis Verbindung (I)/Verbindung (II) im Bereich von 5 bis 1 liegt.

**9.** Synergistische fungizide Zusammensetzungen nach einem der Ansprüche 1 bis 8, **dadurch gekennzeichnet, daß** sie neben den Verbindungen (I) und (II) einen in der Landwirtschaft geeigneten Träger und gegebenenfalls einen in der Landwirtschaft geeigneten grenzflächenaktiven Stoff enthalten.

**10.** Synergistische fungizide Zusammensetzungen nach einem der Ansprüche 1 bis 9, **dadurch gekennzeichnet, daß** sie 0,5 bis 99 % der Kombination aus Verbindung (I) und Verbindung (II) enthalten.

**11.** Verfahren zur Bekämpfung phytopathogener Pilze in Kulturen an einem Ort, das darin besteht, an diesem Ort eine Verbindung (I) und eine Verbindung (II), die wie in Anspruch 1 definiert sind, auszubringen.

**12.** Verfahren zur Bekämpfung von phytopathogenen Pilzen in Kulturen, das der vollständigen Beseitigung dieser Pilze oder der Vorbeugung vor einem Befall mit diesen Pilzen dient, **dadurch gekennzeichnet, daß** auf die zu behandelnden Pflanzen eine nicht phytotoxische und wirksame Menge einer synergistischen fungiziden Zusammensetzung nach einem der Ansprüche 1 bis 10 aufgetragen wind.

**13.** Verfahren nach Anspruch 12, **dadurch gekennzeichnet, daß** die synergistische fungizide Zusammensetzung durch Versprühen einer Flüssigkeit auf die oberirdischen Teile der zu behandelnden Kulturen ausgebracht wird.

**14.** Verfahren nach einem der Ansprüche 12 und 13, **dadurch gekennzeichnet, daß** die Menge der synergistischen fungiziden Zusammensetzung einer Dosis der Verbindung (I) entspricht, die im Bereich von 10 bis 500 g/ha, vorzugsweise 20 bis 300 g/ha, liegt.

**15.** Verfahren nach einem der Ansprüche 12 bis 14, **dadurch gekennzeichnet, daß** die Menge der synergistischen fungiziden Zusammensetzung einer Dosis der Verbindung (II) entspricht, die im Bereich von 10 bis 500 g/ha, vorzugsweise 20 bis 300 g/ha, liegt.

**16.** Produkt, das eine Verbindung der Formel (I) und eine Verbindung der Formel (II) enthält, als kombinierte Zubereitung für die gleichzeitige, getrennte oder sequentielle Verwendung bei der Bekämpfung von phytopathogenen Pilzen in Kulturen an einem Ort.

**Claims**

**1.** Synergistic fungicidal compositions comprising a compound (I) of formula:

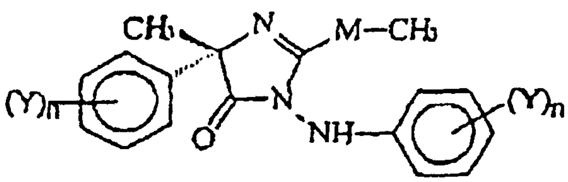

(I)

in which:

- M represents an oxygen or sulphur atom;
- n is an integer equal to 0 or 1;
- Y is a fluorine or chlorine atom or a methyl radical;

and a compound of formula (II) :

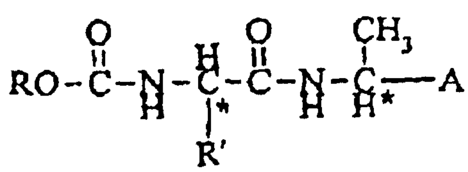

(II)

in which:

- R and R', which are identical or different, are chosen, independently of each other, from a linear or branched alkyl radical containing from 1 to 6 carbon atoms,
- A represents a group chosen from A1 and A2 which have the respective formulae:

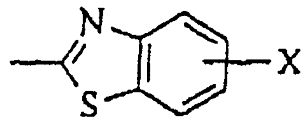

(A1)

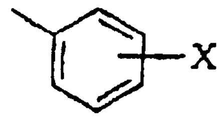

(A2)

and

- X represents a hydrogen atom, a halogen atom chosen from chlorine, fluorine, bromine and iodine, a linear or branched alkyl radical containing from 1 to 6 carbon atoms, or a linear or branched alkoxy radical containing from 1 to 6 carbon atoms, and
- the asterisks represent the asymmetric centres;

the compound (I)/compound (II) ratio being between 50 and 0.01, preferably between 10 and 0.01 and more preferably between 5 and 0.2.

2. Synergistic fungicidal compositions according to Claim 1, **characterized in that** compound (I) is (4-*S*)-4-methyl-2-methylthio-9-phenyl-1-phenylamino-2-imidazolin-5-one.

3. Synergistic fungicidal compositions according to Claim 1, **characterized in that** compound (II) is $N^1$-[(*R*)-1-(6-fluoro-2-benzothiazolyl)ethyl]-$N^2$-isopropoxycarbonyl-L-valinamide.

4. Synergistic fungicidal compositions according to Claim 1, **characterized in that** compound (II) is isopropyl [2-methyl-1-(1-phenylethylcarbamoyl)propyl]carbamate, in the form of a racemate, mixtures of enantiomers and/or of diastereoisomers or a pure optical isomer.

5. Synergistic fungicidal compositions according to Claim 1, **characterized in that** compound (I) is (4-S)-4-methyl-2-methylthio-4-phenyl-1-phenylamino-2-imidazolin-5-one and compound (II) is $N^1$-[(*R*)-1-(6-fluoro-2-benzothiazolyl)-ethyl]-$N^2$-isopropoxycarbonyl-L-valinamide.

6. Synergistic fungicidal compositions according to Claim 1, **characterized in that** compound (I) is (4-S)-4-methyl-2-methylthio-4-phenyl-1-phenylamino-2-imidazolin-5-one and compound (II) is isopropyl [2-methyl-1-(1-phenylethylcarbamoyl)propyl]carbamate, in the form of a racemate, mixtures of enantiomers and/or of diastereoisomers or a pure optical isomer.

7. Synergistic fungicidal compositions according to one of Claims 1 to 6, **characterized in that** they comprise, in addition, another fungicidal active material, in particular iprodione.

8. Synergistic fungicidal compositions according to one of Claims 1 to 7, **characterized in that** the compound (I)/compound (II) ratio is between 5 and 1.

9. Synergistic fungicidal compositions according to one of Claims 1 to 8, **characterized in that** they comprise, besides compounds (I) and (II), an agriculturally suitable inert support and optionally an agriculturally suitable surfactant.

10. Synergistic fungicidal compositions according to one of Claims 1 to 9, **characterized in that** they comprise from 0.5 to 99% of the combination of compound (I) and compound (II).

11. Process for controlling the phytopathogenic fungi of crops in an area, which consists in applying a compound (I) and a compound (II) as defined in Claim 1 to the said area.

12. Process for curatively or preventively controlling the phytopathogenic fungi of crops, **characterized in that** an effective and non-phytotoxic amount of a synergistic fungicidal composition according to one of Claims 1 to 10 is applied onto the plants to be treated.

13. Process according to Claim 12, **characterized in that** the synergistic fungicidal composition is applied by spraying a liquid onto the aerial parts of the crops to be treated.

**14.** Process according to either of Claims 12 and 13, **characterized in that** the amount of synergistic fungicidal composition corresponds to a dose of compound (I) of between 10 and 500 g/ha, preferably between 20 and 300 g/ha.

**15.** Process according to any one of Claims 12 to 14, **characterized in that** the amount of synergistic fungicidal composition corresponds to a dose of compound (II) of between 10 and 500 g/ha, preferably between 20 and 300 g/ha.

**16.** Product comprising a compound of formula (I) and a compound of formula (II) as a combined preparation for simultaneous, separate or sequential use in controlling the phytopathogenic fungi of crops in an area.